# DEMANDE DE BREVET EUROPEEN

(11) **EP 2 236 894 A1**
(43) Date de publication de la demande: **06.10.2010**
(21) Numéro de dépôt: 10155154.7
(22) Date de dépôt: 02.03.2010
(51) Int. Cl.: F16L 37/091, F16L 37/098

(54) **Dispositif de raccordement pour transfert de fluide et son procédé de montage/démontage.**

(30) Priorité: 05.03.2009 FR 0901020
(71) Demandeur: HUTCHINSON, 75008 Paris (FR)
(72) Inventeur: Ully, Stéphane, 45210 Fontenay sur Loing (FR); Gillet, Damien, 45220 Chateau-Renard (FR)
(74) Mandataire: Bolinches, Michel Jean-Marie

(57) **Abrégé**

La présente invention concerne un dispositif de raccordement pour ligne de transfert de fluide, un circuit de retour d'injecteur de carburant l'incorporant, et un procédé de montage/ démontage du dispositif dans un embout femelle à raccorder à l'embout mâle. Ce dispositif comprend :
- un embout tubulaire mâle (1),
- un moyen de connexion à monter autour de l'embout mâle en étant raccordé à un embout femelle (10) et comprenant une extrémité de raccordement à loger dans une gorge (13) de l'embout femelle, et
- un organe de verrouillage (30) de ce moyen de connexion à monter autour de l'embout mâle pour amener réversiblement ladite extrémité de raccordement dans une position de verrouillage dans ladite gorge.

Selon l'invention, ce moyen de connexion est formé d'un seul tenant avec cet organe et comprend une zone d'appui (36) radialement interne à monter contre l'embout mâle et se terminant par ladite extrémité de raccordement, laquelle comprend des pattes (21) élastiquement déformables dans la direction radiale prolongeant la zone d'appui, chaque patte étant apte à être bloquée en position de verrouillage par une flexion contre la gorge et contre l'une des rampes (7) de guidage et d'aide au verrouillage de l'embout mâle.

## Description

La présente invention concerne un dispositif de raccordement pour une ligne de transfert de fluide, un circuit de retour d'injecteur de carburant l'incorporant, et un procédé de montage/ démontage de ce dispositif autour d'un embout tubulaire mâle et dans un embout tubulaire femelle à raccorder à cet embout mâle. L'invention s'applique d'une manière générale à tous raccordements entre de tels embouts transférant un fluide en particulier à basse pression et notamment à des rampes d'injection de carburant pour véhicules à moteur.

D'une manière générale, il est connu pour les rampes d'injection de carburant d'utiliser des dispositifs de raccordement à embout tubulaire mâle venant s'emmancher d'une manière étanche dans un embout tubulaire femelle ou « canule », au moyen d'un organe de liaison flexible qui est monté solidaire de l'embout mâle et qui est verrouillable à son extrémité axialement intérieure dans une gorge circonférentielle interne de l'embout femelle sous la commande d'un organe de verrouillage coopérant avec une partie axialement extérieure de cet organe de liaison.

On peut par exemple citer le document WO-A-2007/042344 qui présente un tel dispositif où l'organe de liaison comporte deux bras axiaux diamétralement opposés qui sont formés d'un seul tenant avec l'embout mâle et qui viennent se verrouiller élastiquement dans la gorge de l'embout femelle par une flexion qui leur est appliquée dans la direction radiale, en s'opposant à leur traction axialement vers l'extérieur.

Un inconvénient majeur de ces dispositifs de raccordement connus est que, dès lors que l'on verrouille l'embout mâle dans l'embout femelle alors que l'organe de liaison n'est pas positionné dans la gorge de raccordement de l'embout femelle, il n'est plus possible par la suite d'amener l'organe de liaison dans cette gorge.

Un autre inconvénient de ces dispositifs connus est qu'ils requièrent tous deux pièces distinctes (i.e. un organe de liaison réalisant la connexion dans la gorge de l'embout femelle et un organe de verrouillage de cet organe de liaison), ce qui impose une opération d'assemblage de ces pièces pas toujours aisée et en outre un coût relativement élevé du dispositif en raison notamment de l'utilisation de matériaux différents pour ces pièces.

Un but de la présente invention est de proposer un dispositif de raccordement pour une ligne de transfert de fluide en particulier à basse pression, qui remédie à ces inconvénients et qui comprend :
- un embout tubulaire mâle,
- un moyen de connexion destiné à être monté autour de l'embout mâle en étant raccordé à un embout tubulaire femelle par une face radialement interne de ce dernier, ce moyen de connexion comprenant une extrémité de raccordement axialement intérieure apte à venir se loger dans une gorge de raccordement de cette face interne, et
- un organe de verrouillage du moyen de connexion qui est destiné à être monté autour de l'embout mâle pour amener réversiblement l'extrémité de raccordement dans une position de verrouillage dans la gorge.

A cet effet, un dispositif selon l'invention est tel que le moyen de connexion est formé d'un seul tenant avec l'organe de verrouillage dont il forme une extrémité axialement intérieure, ce moyen de connexion comprenant une zone d'appui radialement interne destinée à être montée contre l'embout mâle et se terminant par ladite extrémité de raccordement, laquelle comprend au moins deux pattes élastiquement déformables dans la direction radiale et prolongeant la zone d'appui radialement vers l'extérieur, les faces radialement externe et interne de chaque patte étant aptes à être bloquées dans la position de verrouillage, par une flexion de chaque patte, respectivement contre ladite gorge et contre l'une des rampes correspondantes de guidage et d'aide au verrouillage que présente l'embout mâle et qui sont respectivement associées auxdites pattes.

Dans la présente description, on entendra par les expressions « axialement intérieure » ou « axialement vers l'intérieur » une localisation à l'état raccordé selon l'axe de symétrie des embouts mâle et femelle qui est dirigée vers l'intérieur du raccord, i.e. de manière proximale à la gorge de raccordement de l'embout femelle et, inversement, par les expressions « axialement extérieure » ou « axialement vers l'extérieur » une localisation selon cet axe à l'opposé (i.e. de manière distale) de cette gorge.

On notera que ces pattes déformables élastiquement en flexion formant l'extrémité de raccordement de l'organe de verrouillage selon l'invention présentent l'avantage d'impliquer un coût réduit et un montage aisé pour le dispositif de raccordement en comparaison des dispositifs connus à deux pièces, et contribuent en outre à conférer une tenue mécanique à l'arrachement (i.e. à la remontée intempestive en fonctionnement de cette extrémité de raccordement hors de la gorge de l'embout femelle) qui est améliorée en comparaison de celle des dispositifs connus précités, ce qui contribue à la fiabilité du raccordement même sous une pression de fluide élevée en fonctionnement.

De plus et contrairement à l'art antérieur précité, un dispositif de raccordement selon l'invention permet, même si l'on verrouille initialement l'embout mâle dans l'embout femelle sans positionner correctement le moyen de connexion dans la gorge de raccordement, de rendre possible ce positionnement ultérieur dans cette gorge.

On notera également que cette extrémité de raccordement selon l'invention à pattes flexibles dans la direction radiale est apte à être précisément guidée dans la gorge par lesdites rampes, juste avant son blocage en position verrouillée dans cette gorge qui n'est réalisable que dans le cas de ce positionnement et qui est également obtenu par ces rampes.

On notera en outre que le dispositif de raccordement selon l'invention est apte à exercer une fonction « auto-bloquante » en fonctionnement du raccordement de l'embout mâle dans l'embout femelle en position de verrouillage, grâce à la force de compression radiale qui est exercée par ces rampes sur les pattes de raccordement en les plaquant dans la gorge de l'embout femelle et qui est d'autant plus forte que la pression du fluide circulant dans l'embout mâle est plus élevée. Il en résulte une sûreté de fonctionnement accrue de ce dispositif même sous des pressions élevées.

Selon une autre caractéristique de l'invention, chaque patte de raccordement a sa face interne qui présente de préférence une surface oblique ou légèrement concave destinée à être montée au contact d'une arête de ladite rampe correspondante dans la position de verrouillage, et sa face externe qui présente une surface convexe dont le rayon de courbure est apte à épouser sensiblement le profil de ladite gorge dans cette position.

On notera que ces pattes de raccordement présentent avantageusement une épaisseur réduite pour permettre leur déformation radiale.

Avantageusement, la face externe de chaque patte peut comprendre deux tronçons obliques axialement extérieur et intérieur et un troisième tronçon intermédiaire qui sont respectivement destinés à épouser deux bords évasés et un fond plat de ladite gorge.

Selon une autre caractéristique de l'invention, lesdites pattes de raccordement peuvent être chacune en arc de cercle et être reliées entre elles par autant d'encoches conçues pour rendre ces pattes suffisamment déformables en flexion radiale.

Selon une autre caractéristique de l'invention, l'organe de verrouillage peut présenter essentiellement :
- une portion annulaire radialement interne qui est destinée à être montée au contact de l'embout mâle et qui présente un diamètre interne supérieur à celui de ladite zone d'appui que cette portion surmonte, et
- des moyens de préhension formant une extrémité axialement extérieure de l'organe de verrouillage, de préférence au nombre de deux et diamétralement opposés, ces moyens présentant chacun une surface de poussée radiale qui est destinée à recevoir une poussée manuelle d'un opérateur vers l'embout femelle et qui est soutenue et reliée à cette portion annulaire par une portion de liaison s'étendant axialement et radialement vers l'intérieur.

On notera que cet organe de verrouillage n'étant pas en contact avec le fluide, tel qu'un carburant, son matériau constitutif peut être sélectionné pour présenter les caractéristiques mécaniques optimales pour que ses pattes axialement intérieures de raccordement se déforment élastiquement en flexion. Avantageusement, cet organe de liaison est réalisé en un matériau plastique tel qu'un polyamide, à titre non limitatif.

Selon une autre caractéristique préférentielle de l'invention, au moins un moyen de sécurisation du raccordement du moyen de connexion à ladite gorge peut être formé sur l'organe de verrouillage à proximité immédiate de ses moyens de préhension, et être conçu pour venir se coincer directement sous au moins une saillie radiale de l'embout mâle dans la position de verrouillage de sorte à s'opposer à la sortie des pattes de raccordement hors de la gorge par une remontée de l'organe de verrouillage par rapport à l'embout mâle. La ou chaque saillie radiale peut être formée d'une dent de retenue qui prolonge radialement vers l'extérieur une surface centrale d'appui de l'embout mâle et sous laquelle est apte à venir se coincer par clipage au moins une languette, laquelle prolonge radialement vers l'intérieur l'un des moyens de préhension et forme alors ce(s) moyen(s) de sécurisation du raccordement par une butée haute à la manière d'un cran de sécurité.

On notera que le dispositif de raccordement selon l'invention procure alors avantageusement une sécurisation de la connexion d e son extrémité de raccordement à l'embout femelle via les rampes bloquant les pattes dans la gorge, d'une part, et via la ou chaque languette coopérant en clipage avec une saillie radiale correspondante de l'embout mâle, d'autre part. Ce dispositif préférentiel de l'invention avec sécurisation du raccordement présente ainsi une tenue mécanique à l'arrachement très satisfaisante, pouvant résister à une pression élevée.

Egalement avantageusement, l'organe de verrouillage peut incorporer en outre, de préférence en combinaison avec ce(s) moyen(s) de sécurisation du raccordement, un témoin visuel de verrouillage qui est respectivement visible et invisible sur l'embout mâle dans les positions non verrouillée et de verrouillage et qui comporte de préférence au moins un pion axial qui est formé d'un seul tenant avec l'organe de verrouillage en son extrémité axialement extérieure en étant mobile en translation à l'intérieur d'un logement débouchant sur une surface d'appui de l'embout mâle.

Selon un autre aspect de l'invention, ledit embout mâle sur lequel est monté l'organe de verrouillage présente lesdites rampes en saillie radiale, de manière espacée sur sa circonférence et à une même hauteur axiale, chaque rampe présentant de préférence :
- une portion oblique supérieure s'étendant radialement vers l'extérieur et axialement vers l'intérieur selon un angle aigu jusqu'à ladite arête, et
- une portion axiale s'étendant axialement vers l'intérieur à partir de cette arête, chaque patte chevauchant dans la position de verrouillage ces deux portions oblique supérieure et axiale de part et d'autre de cette arête, de telle sorte que ces rampes bloquent à elles seules en fonctionnement les pattes correspondantes dans ladite gorge en les déformant radialement vers l'extérieur.

Selon un exemple de réalisation de l'invention, les rampes se terminent chacune par une portion oblique inférieure et sont de préférence au nombre de deux en étant diamétralement opposées sur l'embout mâle à l'instar des pattes destinées à venir à leur contact dans la position de verrouillage.

Selon une autre caractéristique de l'invention, l'embout mâle peut comporter en outre, entre ces rampes, des moyens de centrage qui sont aptes à guider angulairement cet embout mâle en translation dans l'embout femelle pour faciliter le centrage des pattes de raccordement à l'entrée de ladite gorge, et qui comprennent de préférence des nervures axiales.

Selon une autre caractéristique de l'invention, le dispositif de raccordement comprend en outre au moins un joint d'étanchéité de préférence torique, qui peut être monté ou surmoulé dans une gorge d'étanchéité de l'embout mâle adjacente à une extrémité axialement intérieure de cet embout mâle et qui est destiné à être appliqué contre l'embout femelle.

Un circuit de retour d'injecteur de carburant selon l'invention comporte un embout tubulaire mâle raccordé à un embout tubulaire femelle par un dispositif de raccordement selon l'invention tel que défini ci-dessus.

Un procédé de montage/ démontage selon l'invention en position de verrouillage d'un dispositif de raccordement tel que défini ci-dessus dans un embout tubulaire femelle à raccorder à un embout mâle que comprend ce dispositif, comprend les étapes successives suivantes pour le montage du dispositif :
a) on positionne l'organe de verrouillage autour de l'embout mâle, de préférence de telle manière que lesdites pattes de raccordement soient situées au-dessus desdites rampes,
b) on pousse l'embout mâle jusqu'au fond de l'embout femelle pour le connecter à ce dernier, de telle manière que ces pattes soient situées immédiatement au-dessus de ladite gorge de raccordement,
c) on exerce une poussée axialement vers l'intérieur sur l'organe de verrouillage pour amener ces pattes dans la position de verrouillage, par leur déformation radiale en flexion au contact desdites rampes, puis
d) pour le déverrouillage du dispositif, on exerce une traction axialement vers l'extérieur sur l'organe de verrouillage tout en maintenant l'embout mâle contre le fond de l'embout femelle.

Avantageusement, pour mettre en oeuvre l'étape c), on amène le(s) moyen(s) précité(s) de sécurisation du raccordement que comporte l'organe de verrouillage sous ladite ou lesdites saillie(s) radiale(s) de l'embout mâle, de préférence par clipage d'au moins une languette formant ce moyen sous une dent de retenue correspondante formant la ou chaque saillie.

D'autres caractéristiques, avantages et détails de la présente invention ressortiront à la lecture de la description suivante d'un exemple de réalisation de l'invention donné à titre illustratif et non limitatif, cette description étant réalisée en référence avec les dessins joints, parmi lesquels :
la figure 1 est une vue partielle en coupe axiale d'un embout femelle dans lequel est destiné à être monté un dispositif de raccordement selon l'invention,
la figure 2 est une vue en perspective éclatée d'un dispositif de raccordement selon l'invention destiné à être monté dans l'embout femelle de la figure 1, ce dispositif étant à monter autour d'un embout mâle pourvu d'un joint d'étanchéité,
la figure 3 est une vue en perspective assemblée du dispositif de la figure 2 monté sur ce même embout mâle dans une position non verrouillée de son extrémité de raccordement à l'embout femelle,
la figure 4 est une vue en coupe axiale selon le plan IV-IV de la figure 3 de ce dispositif illustré dans cette position non verrouillée à l'intérieur de l'embout femelle,
la figure 5 est une vue en perspective assemblée du dispositif de la figure 3 monté sur le même embout mâle, mais dans une position de verrouillage de son extrémité de raccordement,
la figure 6 est une vue en coupe axiale selon le plan VI-VI de la figure 5 de ce dispositif illustré dans cette position de verrouillage à l'intérieur de l'embout femelle,
la figure 7 est une vue en coupe axiale de ce dispositif de raccordement verrouillé dans l'embout femelle analogue à celle de la figure 6 mais montrant en outre l'effet auto-bloquant obtenu par ce dispositif au contact de l'embout mâle, et
la figure 8 est une vue de détail de l'extrémité de raccordement du dispositif de la figure 7 verrouillé avec cet effet auto-bloquant dans l'embout femelle.

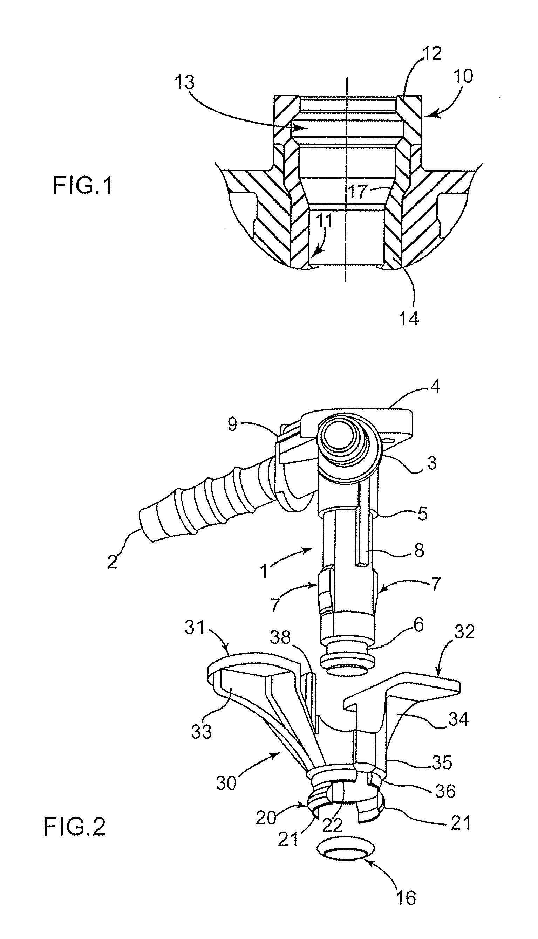

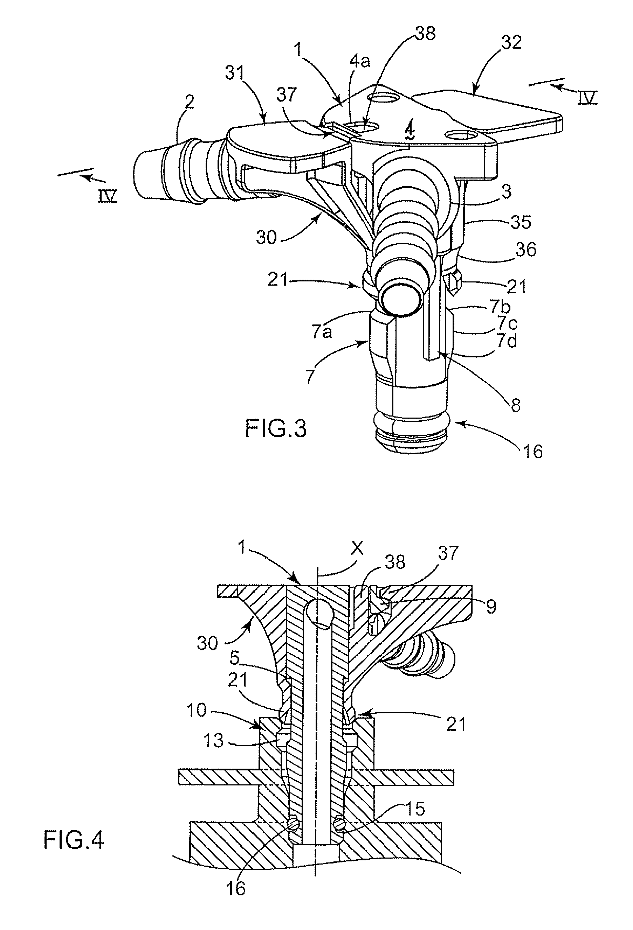

L'embout tubulaire mâle 1 illustré notamment aux figures 2 à 5 présente de manière connue, en son extrémité axialement extérieure (i.e. supérieure), deux raccords de branchement 2 et 3 en forme de queues de sapin qui s'étendent symétriquement l'un de l'autre par rapport à une surface d'appui 4 pour l'opérateur que présente cet embout 1 et qui est centrée sur l'axe X de ce dernier (voir figure 4). L'embout 1 présente par ailleurs un décrochement radial circonférentiel 5 (voir figures 2 et 4) d'aide au montage du dispositif 1.

L'embout tubulaire femelle 10 illustré à la figure 1, de type canule et de forme standard, présente essentiellement sur sa face radialement interne 11, à proximité immédiate de son extrémité axialement supérieure 12, une gorge circonférentielle de raccordement 13 qui est de section axiale sensiblement trapézoïdale et qui est destinée à recevoir une extrémité de raccordement 20 axialement intérieure (i.e. inférieure sur les figures 2 et suivantes. L'embout femelle 10 présente en outre, à proximité immédiate de son extrémité axialement intérieure 14, une zone circonférentielle d'étanchéité 15 (visible à la figure 4) destinée à recevoir un joint torique d'étanchéité 16 (visible aux figures 2 et suivantes) qui est préalablement monté ou surmoulé dans une gorge circonférentielle d'étanchéité 6 de l'embout mâle 1. De manière connue, la section interne de cet embout femelle 10 présente un rétrécissement 17 axialement en dessous de la gorge 13.

Selon l'invention, l'extrémité de raccordement 20 du dispositif est formée par plusieurs pattes 21 élastiquement déformables en flexion radiale (au nombre de deux dans cet exemple de réalisation et en forme de lobes), qui sont incluses dans un organe de verrouillage 30 du dispositif en en formant l'extrémité inférieure. Comme illustré aux figures 2 à 4, cet organe 30 est réalisé en un matériau plastique de bonne tenue mécanique comme par exemple un polyamide, et il comporte dans cet exemple de réalisation :
- deux moyens de préhension 31 et 32 diamétralement opposés formant une extrémité supérieure de l'organe 30 et présentant deux surfaces radiales 31a et 32a destinées à recevoir une poussée manuelle d'un opérateur vers l'embout femelle 10,
- deux portions de liaison 33 et 34 soutenant et reliant ces moyens de préhension 31 et 32 à une portion annulaire 35 située en dessous, chaque portion 33, 34 s'étendant radialement vers l'intérieur sous un moyen de préhension 31, 32,
- cette portion annulaire 35 cylindrique qui est destinée à être montée au contact de l'embout mâle 1 à partir et au-dessus du décrochement 5 de ce dernier,
- une zone d'appui 36 qui est radialement la plus interne pour l'organe 30 et qui est destinée à être montée contre l'embout mâle 1 directement sous le décrochement 5, et
- les deux pattes de raccordement 21 en arcs de cercle qui prolongent vers le bas et radialement vers l'extérieur la zone d'appui 36 en formant l'extrémité inférieure du dispositif, et qui sont chacune aptes à être bloquées en position de verrouillage contre la gorge 13, par leur flexion générée par deux rampes correspondantes 7 de guidage de ces pattes 21 et d'aide au verrouillage, formées en saillie radiale sur l'embout mâle 1.

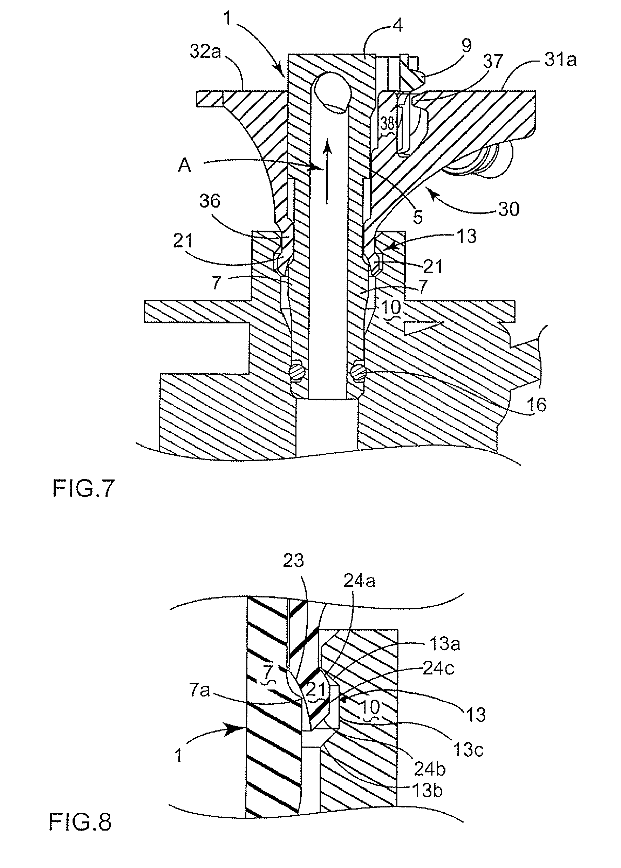

Plus précisément, les pattes 21 sont relativement fines et sont reliées entre elles par deux encoches 22 dont la hauteur axiale est prévue pour rendre ces pattes 21 élastiquement déformables en flexion radiale et peuvent optionnellement conférer une géométrie discontinue (également en arcs de cercles) à la zone d'appui 36. Chaque patte 21 a sa face interne 23 qui est oblique ou légèrement concave pour être montée au contact et de part et d'autre d'une arête 7a de la rampe 7 correspondante en position de verrouillage, et sa face externe 24a à 24c qui est convexe avec un rayon de courbure épousant le profil de la gorge 13. Comme visible à la figure 8, cette face externe comprend deux tronçons obliques supérieur 24a et inférieur 24b et un troisième tronçon intermédiaire 24c respectivement destinés à épouser les deux bords évasés 13a et 13b et le fond plat 13c de la gorge 13.

Quant aux rampes 7, elles sont formées de manière diamétralement opposée sur l'embout mâle 1 et à une même hauteur axiale à l'instar des pattes 21 qu'elles sont destinées à guider axialement et à contraindre radialement, chaque rampe 7 présentant (voir figure 3) une portion oblique supérieure 7b s'étendant radialement vers l'extérieur et vers le bas selon un angle aigu jusqu'à l'arête 7a, une portion axiale cylindrique 7c s'étendant vers le bas à partir de cette arête 7a, e t un e portion oblique inférieure 7d.

L'embout mâle 1 comporte en outre, agencés entre les rampes 7, deux rails de centrage 8 formés dans cet exemple de nervures axiales, qui sont destinés à guider de manière angulaire l'embout 1 en translation dans l'embout femelle 10 pour faciliter le centrage des pattes 21 à l'entrée de la gorge 13.

Selon un autre aspect important de l'invention visible aux figures 3 à 7, l'organe de verrouillage 30 intègre en outre à son extrémité supérieure une languette 37 prévue pour assurer une sécurisation du racordement des pattes 21 à la gorge 13 en coopération avec une dent de retenue 9 de l'embout mâle 1 (on notera qu'il serait possible en variante de prévoir plusieurs languettes 37 coopérant avec autant de dents de retenue 9). La languette 37 est formée sur un bord radialement interne de l'une des deux surfaces de poussée 31 a des moyens de préhension 31 et 32, et elle est conçue pour venir se coincer directement sous la dent 9 qui prolonge radialement vers l'extérieur la surface d'appui 4 de l'embout 1. On obtient ainsi, par un coincement axial réversible, un cran de sécurité pour la position de verrouillage des pattes 21 dans la gorge 13, puisque le clipage de la languette 37 sous la dent 9 s'oppose à la remontée intempestive de l'organe de verrouillage 30 autour de l'embout mâle 1 (comme visible à la figure 4, on dispose également ainsi d'un cran de sécurité en position haute de l'organe 30, où la languette 37 surmonte la dent 8).

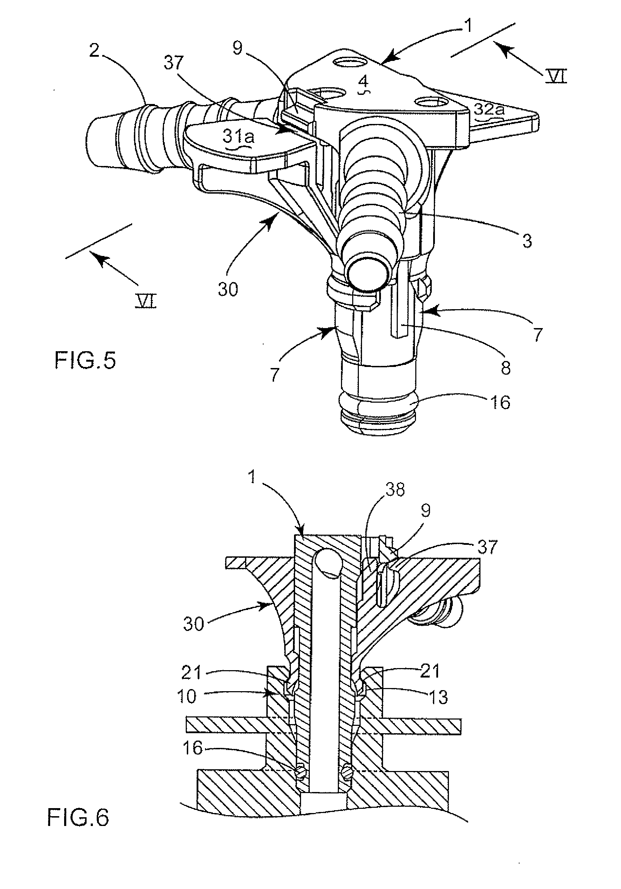

L'organe 30 incorpore enfin un témoin visuel de verrouillage 38 qui est visible sur l'embout mâle 1 dans la position non verrouillée des figures 3 et 4 et invisible sur cet embout 1 dans la position de verrouillage des figures 5 à 7, et qui est constitué d'un pion axial 38 formé d'un seul tenant avec l'organe 30 radialement à l'intérieur de la languette 37 et mobile en translation axiale avec l'organe 30 à l'intérieur d'un logement traversant 4a de l'embout 1 débouchant sur sa surface d'appui 4. Ce pion 38 présente avantageusement une couleur contrastant avec celle de l'embout 1 pour faciliter la visualisation par l'opérateur de la position déverrouillée où il affleure la surface d'appui 4. Dans la position de verrouillage qui est obtenue en appuyant vers le bas sur l'organe 30, le pion 38 est enfoncé par rapport à cette surface 4 du fait du clipage de la languette 37 sous la dent 9, étant ainsi invisible pour l'opérateur.

Comme illustré aux figures 4 à 6, on procède de la manière suivante pour réaliser, verrouiller puis déverrouiller le raccordement des pattes 21 dans la gorge 13 de l'embout femelle 10 :
a) on positionne l'organe 30 autour de l'embout mâle 1 de manière que les pattes 21 se situent de préférence au-dessus des rampes 7 (voir figure 3),
b) on pousse l'embout 1 jusqu'au fond de l'embout femelle 10 pour l'y connecter en butée, de telle manière que les pattes 21 viennent immédiatement au-dessus de la gorge 13 (voir figure 4) en étant centrées précisément sur l'embout femelle 10 grâce aux nervures 8 de l'embout 1,
c) on exerce une poussée vers le bas sur l'organe 30 via un clipage de la languette 37 sous la dent 9 (se traduisant par une disparition à la vue du pion 38) pour amener les pattes 21 en position sécurisée de verrouillage dans la gorge 13 (voir figure 6), par leur flexion radiale au contact des rampes 7 les y ayant guidées puis bloquées, et
d) pour le déverrouillage du dispositif, on exerce une traction vers le haut sur l'organe 30 tout en maintenant l'embout mâle 1 contre le fond de l'embout femelle 10.

On notera que le diamètre réduit des pattes 21 permet de minimiser l'effort requis pour l'obtention de la position de verrouillage à l'étape c), étant précisé que l'on n'a pas lors de l'établissement du raccordement un cumul des efforts respectifs liés aux pattes 21 et au joint 16.

Enfin et comme illustré aux figures 7 et 8, le dispositif selon l'invention présente l'avantage d'être « auto-bloquant » en fonctionnement, sous l'effet de la pression du fluide circulant dans l'embout mâle 1 (voir flèche A de la figure 7 pour cette circulation du fluide), grâce aux rampes 7 contraignant alors encore davantage les pattes 21 radialement contre la gorge 13 et se traduisant par une force d'arrachement très élevée requise pour déverrouiller le dispositif.

## Revendications

1. Dispositif de raccordement pour une ligne de transfert de fluide en particulier à basse pression, comprenant :
- un embout tubulaire mâle (1),
- un moyen de connexion destiné à être monté autour de l'embout mâle en étant raccordé à un embout tubulaire femelle (10) par une face radialement interne (11) de ce dernier, ce moyen de connexion comprenant une extrémité de raccordement (20) axialement intérieure apte à venir se loger dans une gorge de raccordement (13) de cette face interne, et
- un organe de verrouillage (30) de ce moyen de connexion qui est destiné à être monté autour de l'embout mâle pour amener réversiblement ladite extrémité de raccordement dans une position de verrouillage dans ladite gorge,
**caractérisé en ce que** le moyen de connexion est formé d'un seul tenant avec l'organe de verrouillage dont il forme une extrémité axialement intérieure, ce moyen de connexion comprenant une zone d'appui (36) radialement interne destinée à être montée contre l'embout mâle et se terminant par ladite extrémité de raccordement, laquelle comprend au moins deux pattes (21) élastiquement déformables dans la direction radiale et prolongeant la zone d'appui radialement vers l'extérieur, les faces radialement externe (24a à 24c) et interne (23) de chaque patte étant aptes à être bloquées dans la position de verrouillage, par une flexion de chaque patte, respectivement contre ladite gorge et contre l'une des rampes (7) correspondantes de guidage et d'aide au verrouillage que présente l'embout mâle et qui sont respectivement associées auxdites pattes.

2. Dispositif de raccordement selon la revendication 1, **caractérisé en ce que** chaque patte de raccordement (21) a sa face interne (23) qui présente une surface oblique ou légèrement concave destinée à être montée au contact d'une arête (7a) de ladite rampe (7) correspondante dans la position de verrouillage, et sa face externe (24a à 24c) qui présente une surface convexe dont le rayon de courbure est apte à épouser sensiblement le profil de ladite gorge (13) dans cette position.

3. Dispositif de raccordement selon la revendication 2, **caractérisé en ce que** la face externe (24a à 24c) de chaque patte (21) comprend deux tronçons obliques axialement extérieur (24a) et intérieur (24b) et un troisième tronçon intermédiaire (24c) qui sont respectivement destinés à épouser deux bords évasés (13a et 13b) et un fond plat (13c) de ladite gorge (13).

4. Dispositif de raccordement selon une des revendications précédentes, **caractérisé en ce que** lesdites pattes de raccordement (21) sont chacune en arc de cercle et reliées entre elles par autant d'encoches (22) conçues pour rendre ces pattes suffisamment déformables en flexion radiale.

5. Dispositif de raccordement selon une des revendications précédentes, **caractérisé en ce que** l'organe de verrouillage (30) présente essentiellement :
- une portion annulaire (35) radialement interne qui est destinée à être montée au contact de l'embout mâle (1) et qui présente un diamètre interne supérieur à celui de ladite zone d'appui (36) que cette portion surmonte, et
- des moyens de préhension (31 et 32) formant une extrémité axialement extérieure de l'organe de verrouillage, de préférence au nombre de deux et diamétralement opposés, ces moyens présentant chacun une surface de poussée radiale (31a, 32a) qui est destinée à recevoir une poussée manuelle d'un opérateur vers l'embout femelle (10) et qui est soutenue et reliée à cette portion annulaire (35) par une portion de liaison (33, 34) s'étendant axialement et radialement vers l'intérieur.

6. Dispositif de raccordement selon la revendication 5, **caractérisé en ce qu'**au moins un moyen de sécurisation du raccordement (37) du moyen de connexion à ladite gorge (13) est formé sur l'organe de verrouillage (30) à proximité immédiate desdits moyens de préhension (31 et 32), et est conçu pour venir se coincer directement sous au moins une saillie radiale (9) de l'embout mâle (1) dans la position de verrouillage de sorte à s'opposer à la sortie de ladite extrémité de raccordement (20) hors de la gorge (13) par une remontée de l'organe de verrouillage par rapport à l'embout mâle.

7. Dispositif de raccordement selon la revendication 6, **caractérisé en ce que** ladite ou chaque saillie radiale (9) est formée d'une dent de retenue qui prolo nge radiale ment vers l'extérieur une surface centrale d'appui (4) de l'embout mâle (1) et sous laquelle est apte à venir se coincer par clipage au moins une languette (37), laquelle forme le(s)dit(s) moyen(s) de sécurisation du raccordement et prolonge radialement vers l'intérieur l'un desdits moyens de préhension (31).

8. Dispositif de raccordement selon une des revendications précédentes, **caractérisée en ce que** l'organe de verrouillage (30) incorpore en outre un témoin visuel de verrouillage (38) qui est respectivement visible et invisible sur l'embout mâle (1) dans les positions non verrouillée et de verrouillage et qui comporte de préférence au moins un pion axial (38) qui est formé d'un seul tenant avec l'organe de verrouillage en son extrémité axialement extérieure en étant mobile en translation à l'intérieur d'un logement (4a) débouchant sur une surface d'appui (4) de l'embout mâle.

9. Dispositif de raccordement selon la revendication 2 et l'une des revendications 3 à 8, **caractérisé en ce que** cet embout mâle sur lequel est monté l'organe de verrouillage (30) présente lesdites rampes (7) en saillie radiale, de manière espacée sur sa circonférence et à une même hauteur axiale, chaque rampe présentant :
- une portion oblique supérieure (7b) s'étendant radialement vers l'extérieur et axialement vers l'intérieur selon un angle aigu jusqu'à ladite arête (7a), et
- une portion axiale (7c) s'étendant axialement vers l'intérieur à partir de cette arête, chacune desdites pattes (21) chevauchant dans la position de verrouillage ces deux portions oblique supérieure et axiale de part et d'autre de cette arête, de telle sorte que ces rampes bloquent à elles seules en fonctionnement les pattes correspondantes dans ladite gorge (13) en les déformant radialement vers l'extérieur.

10. Dispositif de raccordement selon la revendication 9, **caractérisé en ce que** lesdites rampes (7) se terminent chacune par une portion oblique inférieure (7d) et sont de préférence au nombre de deux en étant diamétralement opposées sur l'embout mâle (1) à l'instar desdites pattes (21) destinées à venir à leur contact dans la position de verrouillage.

11. Dispositif de raccordement selon la revendication 9 ou 10, **caractérisé en ce que** l'embout mâle (1) comporte en outre, entre lesdites rampes (7), des moyens de centrage (8) qui sont aptes à guider cet embout mâle en translation dans l'embout femelle (10) pour faciliter le centrage angulaire desdites pattes de raccordement (21) à l'entrée de ladite gorge (13), et qui comprennent de préférence des nervures axiales (8).

12. Dispositif de raccordement selon une des revendications 9 à 11, **caractérisé en ce qu'**il comprend en outre au moins un joint d'étanchéité (16) de préférence torique, qui est monté ou surmoulé dans une gorge d'étanchéité (6) de l'embout mâle (1) adjacente à une extrémité axialement intérieure de cet embout mâle et qui est destiné à être appliqué contre l'embout femelle (10).

13. Circuit de retour d'injecteur de carburant comportant un embout tubulaire mâle (1) raccordé à un embout tubulaire femelle (10) par un dispositif de raccordement, **caractérisé en ce que** ce dispositif est tel que défini à l'une des revendications précédentes.

14. Procédé de montage/ démontage en position de verrouillage d'un dispositif de raccordement selon une des revendications 1 à 12 dans un embout tubulaire femelle (10) à raccorder à un embout mâle que comprend ce dispositif, **caractérisé en ce qu'**il comprend les étapes successives suivantes pour le montage du dispositif :
a) on positionne l'organe de verrouillage (30) autour de l'embout mâle, de préférence de telle manière que lesdites pattes de raccordement (21) soient situées au-dessus desdites rampes (7),
b) on pousse l'embout mâle jusqu'au fond de l'embout femelle pour le connecter à ce dernier, de telle manière que ces pattes soient situées immédiatement au-dessus de ladite gorge de raccordement (13),
c) on exerce une poussée axialement vers l'intérieur sur l'organe de verrouillage pour amener ces pattes dans la position de verrouillage, par leur déformation radiale en flexion au contact desdites rampes, puis
d) pour le déverrouillage du dispositif, on exerce une traction axialement vers l'extérieur sur l'organe de verrouillage tout en maintenant l'embout mâle contre le fond de l'embout femelle.

15. Procédé de montage/ démontage selon la revendication 14, le dispositif de raccordement étant selon la revendication 6 ou 7, **caractérisé en ce que** pour mettre en oeuvre l'étape c), on amène le(s)dit(s) moyen(s) de sécurisation du raccordement (37) que présente l'organe de verrouillage (30) sous ladite ou lesdites saillie(s) radiale(s) (9) de l'embout mâle (1), de préférence par clipage d'au moins une languette (37) formant ce moyen sous une dent de retenue (9) correspondante formant la ou chaque saillie.
